# EUROPÄISCHE PATENTANMELDUNG

(11) **EP 0 649 227 A1**
(43) Veröffentlichungstag der Anmeldung: **19.04.1995**
(21) Anmeldenummer: 94115824.8
(22) Anmeldetag: 07.10.1994
(51) Int. Cl.: H04B 1/38, H01Q 21/20

(54) **Handfunkgerät und Fahrzeugfunkgerät mit einstellbarer Richtantenne**

(30) Priorität: 16.10.1993 DE 4335343
(71) Anmelder: Alcatel SEL Aktiengesellschaft, D-70435 Stuttgart (DE); ALCATEL N.V., NL-1077 XX Amsterdam (NL)
(72) Erfinder: Weis, Bernd X., D-70825 Korntal-Münchingen (DE)
(74) Vertreter: Brose, Gerhard

(57) **Zusammenfassung**

**Stand der Technik:** Handfunkgerät mit phasengesteuerter Gruppenantenne.

**Technisches Problem:** Handhabbare Gestaltung von Handfunkgerät und Antenne.

**Grundgedanke:** Kreisförmige Anordnung der Einzelelemente der Antenne.

**Beispiel:** Antenne in zylinderförmigem Gehäuse am oberen Ende des Handfunkgeräts angeformt.

## Beschreibung

Die Erfindung betrifft ein Handfunkgerät mit aus mehreren Einzelelementen bestehender Antenne, bei der verschiedene Richtwirkungen einstellbar sind sowie ein Fahrzeugfunkgerät.

Ein solches Handfunkgerät ist bekannt aus DE 41 34 357 A1. Dort sind Antennen angegeben, deren Einzelelemente entweder nebeneinander in einer Linie liegen oder die neben- und übereinander in einer Ebene liegen. Durch Einstellungen verschiedener Phasen für die Einzelelemente können verschiedene Richtwirkungen eingestellt werden. Die entsprechende Technik ist, beispielsweise für Radar- und Navigationsanwendungen, bestens bekannt. In Verbindung mit Handfunkgeräten sind solche Antennen nicht grundsätzlich unbrauchbar. Sie werden auch in gewissem Maße akzeptiert, weil sie doch verschiedene Vorteile bringen. Dennoch besteht der Wunsch nach einer besser handhabbaren Gestaltung von Handfunkgerät und Antenne.

Hier hilft die Erfindung durch ein Handfunkgerät nach der Lehre des Anspruchs 1. Ähnliche Überlegungen führen zu einem Fahrzeugfunkgerät nach der Lehre des Anspruchs 5.

Schon mit einer geringen Richtwirkung lassen sich wesentliche Verbesserungen erreichen. Eine Richtwirkung von 3dB beispielsweise, was dem Faktor 2 entspricht, läßt mit einer um den Faktor 2 reduzierten Sendeleistung eine gleich gute Verbindung erreichen wie ohne Richtwirkung. Bei gegebener Batterieladung ist das Gerät damit beinahe doppelt so lange sendebereit. Die Umweltbelastung durch sogenannten Elektrosmog nimmt um denselben Faktor ab. Die Frequenz kann bereits in geringerer Entfernung wiederverwendet werden. Bei geeigneter Drehung des Benutzers wird dieser deutlich weniger durch die Strahlung belastet. Die dafür erforderliche und auch ausreichende Richtwirkung läßt sich schon durch die im Anspruch 1 angegebene kompakte Anordnung erreichen.

Weitere Ausgestaltungen der Erfindung sind den Unteransprüchen zu entnehmen.

Im folgenden wird die Erfindung anhand eines Ausführungsbeispiels unter Zuhilfenahme der bei liegenden Zeichnungen weiter erläutert.

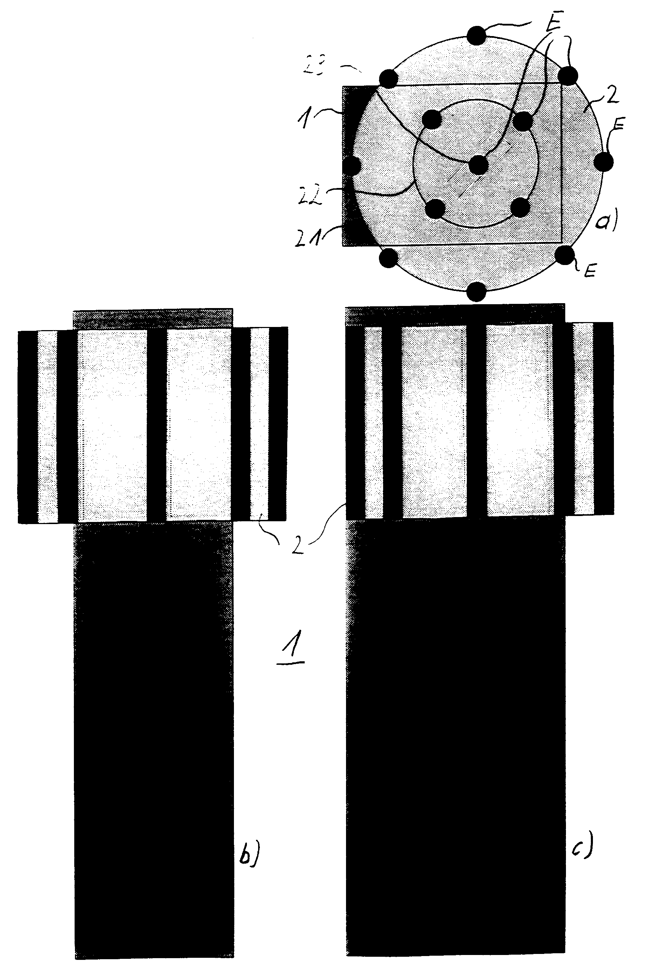

Die Figur zeigt ein Handfunkgerät 1 mit einer Antenne 2 in Querschnitt a), Seitenansicht b) und Vorderansicht c). Details, insbesondere Mikrophon- und Lautsprecheröffnungen, sowie Anzeigen und Tastaturen, sind nicht dargestellt.

Detaillierter dargestellt ist dagegen die Antenne 2, deren Aufbau besonders im Querschnitt a) deutlich wird. Die gesamte Antenne ist in diesem Beispiel in einem zylinderförmigen, nicht leitfähigen Gehäuse enthalten, das am oberen Ende des Handfunkgeräts an dieses angeformt ist.

Eine Antenne ist, ganz allgemein, umso wirkungsvoller, je größer sie ist. Eine Antenne mit etwa 8 cm Durchmesser und 6 cm Höhe wird als noch akzeptabel angesehen. In dem für viele zukünftige Anwendungen vorgesehenen Frequenzbereich von 1,8 GHz bis 2 GHz wird eine derartige Antenne, auch im Hinblick auf die erreichbare Richtwirkung, als ausreichend angesehen.

Die Antenne 2 besteht aus mehreren Einzelelementen E, die auf zwei konzentrischen Kreisen 21 und 22 und im Kreismittelpunkt 23 angeordnet sind. Die Einzelelemente E sind untereinander gleich; sie sind alle parallel zueinander angeordnet. Der äußere Kreis 21 trägt acht Einzelelemente, der innere Kreis 22 deren vier. Die Einzelelemente auf dem inneren Kreis können auch entfallen. Gleiches gilt für das Einzelelement im Kreismittelpunkt. Dies hängt vom Aufwand ab, der für die phasenrichtige Ankopplung der Einzelelemente getrieben werden soll und kann. Es hängt aber auch von der Betriebsfrequenz ab. Bei sehr hohen Frequenzen, wenn also die Einzelelemente sehr klein sind , kann auch an gestockte Anordnungen gedacht werden, wodurch sich auch in Elevationsrichtung eine Richtwirkung ergibt.

Die Einstellung einer Richtwirkung ist sowohl für den Sende-, wie für den Empfangsfall sinnvoll. Sie ist auch für beide Fälle gleichermaßen möglich. Insbesondere ist die Einstellung einer Richtwirkung im Empfangsfall zur Ortung der Gegenstation erforderlich, um im Sendefall überhaupt die einzustellende Richtung zu kennen.

Die phasenrichtige Ankopplung der Einzelelemente zur Erzielung einer bestimmten Richtwirkung kann nach jeder dafür geeigneten Methode erfolgen. Im einfachsten Fall wird nur der äußere Kreis 21 verwendet und es werden jeweils zwei einander entgegengesetzte Einzelelemente ausgewählt, die dann mit einem ihrem Abstand entsprechenden Phasenunterschied gespeist werden.

Auch für die Ortung kann jede dafür geeignete Methode verwendet werden. Beispielsweise kann bei der Verbindungsaufnahme das Richtdiagramm einmal rotieren und während der laufenden Verbindung leicht hin und her geschwenkt werden, um zunächst die Richtung mit bestem Empfang zu ermitteln und später nachzuführen.

Das Einzelelement im Kreismittelpunkt 23 kann sowohl als Bestandteil der Richtantenne als auch als separat zu nutzende Einzelantenne verwendet werden. Eine separate Einzelantenne kann z.B. als reine Empfangsantenne Verwendung finden. Sie kann beispielsweise auch zur Signalisierung in Sende- und Empfangsrichtung verwendet werden, wenn mit mehr als einer Gegenstation Signalisierung ausgetauscht werden soll.

Für ein Fahrzeugfunkgerät gelten dieselben Überlegungen.

## Patentansprüche

1. Handfunkgerät mit aus mehreren Einzelelementen (E) bestehender Antenne (2), bei der verschiedene Richtwirkungen einstellbar sind, **dadurch gekennzeichnet,** daß die Einzelelemente (E) auf einem Kreis (21) angeordnet sind.

2. Handfunkgerät nach Anspruch 1, dadurch gekennzeichnet, daß auf einem weiteren Kreis (22) weitere Einzelelemente (E) angeordnet sind.

3. Handfunkgerät nach Anspruch 1, dadurch gekennzeichnet, daß im Kreismittelpunkt (23) ein weiteres Einzelelement (E) angeordnet ist.

4. Handfunkgerät nach Anspruch 1, dadurch gekennzeichnet, daß die Einzelelemente in einem zylinderförmigen, nicht leitfähigen Gehäuse enthalten sind und daß dieses Gehäuse an das obere Ende des Handfunkgeräts angeformt ist.

5. Fahrzeugfunkgerät mit aus mehreren Einzelelementen (E) bestehender Antenne (2), bei der verschiedene Richtwirkungen einstellbar sind, **dadurch gekennzeichnet,** daß die Einzelelemente (E) auf einem Kreis (21) angeordnet sind.
